# EUROPÄISCHE PATENTANMELDUNG

(11) **EP 1 447 985 A1**
(43) Veröffentlichungstag der Anmeldung: **18.08.2004**
(21) Anmeldenummer: 04000713.0
(22) Anmeldetag: 15.01.2004
(51) Int. Cl.: H04N 7/18, H04N 5/33

(54) **Vorrichtung und Verfahren zur Verbesserung der Sicht in Kraftfahrzeugen**

(30) Priorität: 24.01.2003 DE 10303044
(71) Anmelder: DaimlerChrysler AG, 70567 Stuttgart (DE)
(72) Erfinder: Holz, Michael, 89250 Senden (DE); Weidel, Edgar, 89250 Senden (DE); Weidel, Michael, 89250 Senden (DE)

(57) **Zusammenfassung**

Die Erfindung betrifft eine Vorrichtung zur Verbesserung der Sicht für Kraftfahrzeuge mit einer Bildaufnahmeeinrichtung, einer Bildverarbeitungseinrichtung und einer Bildanzeigeeinrichtung, wobei die Bildverarbeitungseinrichtung Mittel aufweist, den von der Bildaufnahmeeinrichtung aufgenommenen Eingangsfarbwerten Darstellungsfarbwerte zur Darstellung durch die Bildanzeigeeinrichtung zuzuordnen und wobei für jeweils einen Eingangsfarbwert in Abhängigkeit von den Umgebungsbedingungen bestimmte Darstellungsfarbwerte vorgesehen sind.

## Beschreibung

Die Erfindung betrifft Vorrichtungen und Verfahren zur Verbesserung der Sicht für Kraftfahrzeuge sowie mit den Vorrichtungen ausgestattete Fahrzeuge.
Im allgemeinen verfügen Sichtverbesserungsvorrichtungen für Fahrzeuge über eine Bildaufnahmeeinrichtung wie beispielsweise eine Video- oder Infrarotkamera, eine Bildverarbeitungseinrichtung sowie eine Bildanzeigeeinrichtung wie z. B. einen im Fahrzeug im Blickfeld des Fahrers angebrachten Bildschirm. Dabei nimmt die Kamera Bilder aus der Umgebung auf und führt diese der Bildverarbeitungseinrichtung zu, die nachfolgend die aufbereiteten Bilder zur Darstellung dem Bildschirm zuleitet.

In der deutschen Offenlegungsschrift DE 4007646 A1 ist ein derartiges System auf Infrarotbasis beschrieben. Die dort vorgestellte Lösung zeigt eine Vorrichtung, bei der die Umgebung mittels eines Infrarotscheinwerfers beleuchtet wird. Über eine CCD-Kamera mit Empfangsoptik wird das Bild der Umgebung aufgenommen und anschließend einer Bildanzeigeeinrichtung zur Darstellung zugeleitet.
Damit wird dem Fahrer abhängig von der Umgebungssituation ein Bild unterschiedlicher Qualität angezeigt; dabei kann sich beispielsweise die Wettersituation deutlich nachteilig auf die Güte des dargestellten Bildes auswirken.

Ein weiterer Ansatz zur Bilddarstellung in Sichtverbesserungssystemen ist in der deutschen Offenlegungsschrift DE 100 16 184 A1 vorgestellt. Das dort beschriebene System beruht darauf, dass nach der Bildaufnahme zunächst von einer Signalverarbeitungslogik die Qualität des Bildes hinsichtlich Schärfe und Kontrast bewertet wird. Bilder von hoher Qualität werden in einem Zwischenspeicher abgelegt. Diese Bilder werden, falls von der Signalverarbeitungslogik Bilder von minderer Qualität erkannt werden, anstatt der Originalbilder dem Fahrer zur Verfügung gestellt. Problematisch hierbei ist, dass bei einer geringen Qualität der aufgenommenen Bilder in vermehrtem Umfang Bilder aus dem Speicher verwendet werden, die nicht die momentane Realität in der Fahrzeugumgebung repräsentieren und somit regelmäßig veraltet sind. Damit wird in diesen Fällen das Unfallrisiko durch die vorgestellte Vorrichtung eher erhöht als verringert.

Der Erfindung liegt die Aufgabe zugrunde, ein Sichtverbesserungssystem für Fahrzeuge anzugeben, in dem die Darstellung der Bilddaten verbessert ist.

Diese Aufgabe wird durch die Vorrichtungen zur Verbesserung der Sicht in Fahrzeugen und das Verfahren mit den in den Ansprüchen 1, 11 und 12 beschriebenen Merkmalen gelöst. Die in den Unteransprüchen beschriebenen Vorrichtungen bilden vorteilhafte Aus- und Weiterbildungen der Erfindung.

Eine erste vorteilhafte Realisation der Erfindung zeigt eine Bildaufnahmeeinrichtung wie beispielsweise eine CCD-Kamera, eine Bildverarbeitungseinrichtung mit Mitteln zur Speicherung und Konvertierung von Bilddaten sowie z. B. einen Bildschirm als Bildanzeigeeinrichtung. Dabei nimmt die Bildaufnahmeeinrichtung pixelweise oder bereichsweise bestimmte Eingangsfarbwerte aus der Umgebung auf. Dies wird beispielsweise bei vielen handelsüblichen Farb-CCD-Kameras durch eine jeweils spektral getrennte Aufnahme der Intensitäten der Rot- Grünund Blauanteile im einfallenden Licht vorgenommen, so dass sich für den aufgenommenen Eingangsfarbwert ein Zahlentripel aus den jeweils detektierten Intensitäten der drei Grundfarben ergibt. Infrarotkameras hingegen nehmen typischerweise nur die Intensität einfallender Infrarotstrahlung auf, so dass der jeweilige Eingangsfarbwert hier regelmäßig nur aus einer einzelnen Maßzahl für die aufgenommene Intensität besteht.
Anschließend wird in der Bildverarbeitungseinrichtung eine Transformation dieses Eingangsfarbwertes auf einen Darstellungsfarbwert vorgenommen, der für die Anzeige des Pixels und ggf. seiner Umgebung auf dem Bildschirm zugrunde gelegt wird; d. h. dem aufgenommenen Eingangsfarbwert wird ein Darstellungsfarbwert zugeordnet, der der Darstellung des Pixels und ggf. seiner Umgebung in einer Bildanzeigeeinrichtung zugrunde gelegt werden soll.
Diese Transformation erfolgt jedoch erfindungsgemäß im Unterschied zum Stand der Technik nicht statisch, sondern hängt von den Umgebungsbedingungen ab. Beispielsweise werden in Abhängigkeit von der Wetterlage für einen Eingangsfarbwert unterschiedliche Werte für den Darstellungsfarbwert gewählt. Hierdurch gelingt es, das für den Fahrer dargestellte Bild besonders leicht erkennbar, informativ und aussagefähig zu machen.
Damit trägt die Erfindung der Erkenntnis Rechnung, dass die von der Kamera eines Sichtverbesserungssystems aufgenommenen Bilddaten beispielsweise in Abhängigkeit von Wetter und Tageszeit deutlich unterschiedliche Charakteristiken zeigen. So enthalten beispielsweise in den von einer Infrarotkamera aufgenommenen Bilder bei Nacht und trockener Straße vor allem die Bereiche geringer Intensität die für den Fahrer relevante Information, während bei Nebel diese Information primär in Bereichen mittlerer Intensität zu finden ist.
Die erfindungsgemäße Vorrichtung gestattet es somit, aufgenommene Bilddaten derart aufzubereiten, dass dem Betrachter ein Bild mit hohem Informationsgehalt zur Verfügung gestellt wird.

So erlaubt es die erfindungsgemäße Vorrichtung beispielsweise bei Nebel, die dort auftretenden schwachen Kontraste im aufgenommenen Bild für die Darstellung zu verstärken, wohingegen bei Nacht und Regen die starken Kontraste abgeschwächt werden und so die in dieser Situation typischerweise auftretende Blendgefahr minimiert wird.
Hierdurch wird die Darstellung der für den Fahrer relevanten Informationen bei jeder Wetterlage und bei allen auftretenden Lichtverhältnissen gewährleistet und damit die Sicherheit und Benutzerfreundlichkeit des verwendeten Sichtverbesserungssystems deutlich erhöht.

Eine weitere vorteilhafte Ausgestaltung der Erfindung besteht darin, dass in einer Speichereinheit mehrere Farbtabellen mit auftretenden Eingangsfarbwerten korrespondierenden Darstellungsfarbwerten hinterlegt sind. Konkret bedeutet dies, dass wie in der nachfolgenden Tabelle auszugsweise skizziert für verschiedene zu erwartende Umfeldszenarien bestimmte Darstellungsfarbwerte für mögliche Eingangsfarbwerte hinterlegt sind.

| Eingangsfarbwert | | | Darstellungsfarbwerte | | | | | |
|---|---|---|---|---|---|---|---|---|
| | | | Umfeldszenario: "Regen" | | | Umfeldszenario: "Nacht" | | |
| R | G | B | R | G | B | R | G | B |
| 15 | 20 | 20 | 25 | 20 | 17 | 20 | 18 | 20 |
| 50 | 50 | 50 | 40 | 55 | 60 | 45 | 60 | 55 |
| 115 | 110 | 100 | 130 | 115 | 120 | 110 | 100 | 110 |

So kann beispielsweise für den Eingangsfarbwert mit dem RGB-Wert (15,20,20) als Darstellungsfarbwert für Regen (25,20,17), für Nacht (20,18,20) und für Nebel (in obiger Beispieltabelle nicht dargestellt) (30,28,23) verwendet werden. Die jeweils zu verwendende Farbtabelle ist dabei für ein bestimmtes Umfeldszenario wie bspw. Regen oder Nacht angepasst und auswählbar.

Die Festlegung der Farbtabellen für die jeweiligen Szenarien kann dabei vorab auf Basis experimenteller oder statistischer Ergebnisse vorgenommen werden.

Der für die verschiedenen Farbtabellen benötigte Speicherplatz in der Speichereinheit kann auf vorteilhafte Weise begrenzt werden. Hierzu ist es zweckmäßig, nicht für alle auftretenden Eingangsfarbwerte Darstellungsfarbwerte zu hinterlegen, sondern beispielsweise nur für einen bestimmten Anteil. Für die Bestimmung eines Darstellungsfarbwertes zu einem in der Farbtabelle nicht hinterlegten Eingangsfarbwert nimmt eine Logikeinheit bspw. eine Interpolation zwischen den Darstellungsfarbwerten der beiden benachbarten in der Farbtabelle hinterlegten Eingangsfarbwerte vor.
Unter Verwendung der oben dargestellten Tabelle soll dies für die Umgebungssituation "Regen" beispielhaft erläutert werden. Der Eingangsfarbwert sei bspw. (30,30,30). Ferner seien die beiden nächstgelegenen in der Farbtabelle hinterlegten Eingangsfarbwerte (15,20,20) (zugehöriger Darstellungsfarbwert für Regen (25,20,17)) und (50,50,50) (zugehöriger Darstellungsfarbwert für Regen (40,55,60)). Eine lineare Interpolation für die einzelnen Komponenten liefert als zugehörigen Darstellungsfarbwert (31,32,31). In der Logikeinheit lassen sich über die lineare Interpolation hinaus weitere, komplexere Bildungsregeln zur Interpolation für Darstellungsfarbwerte zu nicht hinterlegten Eingangsfarbwerten integrieren. Damit wird der Speicherbedarf für die Farbtabellen wesentlich reduziert und der Aufwand und Preis für die Speichereinheit werden begrenzt.

Besonders vorteilhaft ist es, die Farbtabellen zu personalisieren, d. h. an die optische Wahrnehmung des jeweiligen Benutzers anzupassen. Insbesondere durch die Verwendung von biometriebasierten Zugangskontroll- und Fahrberechtigungssystemen wird die Zuordnung der passenden Farbtabellen zum jeweiligen Fahrer vereinfacht. Somit werden für unterschiedliche Benutzer in ein und derselben Umgebungssituation wie bspw.

Nebel verschiedene, jeweils auf den Benutzer abgestimmte Farbtabellen verwendet. Die an die persönliche Wahrnehmung des jeweiligen Fahrers angepasste Bilddarstellung gewährleistet dabei die verstärkte Akzeptanz der Vorrichtung in Verbindung mit erhöhter Sicherheit.

Für die Anpassung an die aktuelle Wettersituation hat es sich besonders bewährt, die Auswahl der passenden Farbtabelle insbesondere automatisch anhand eines von einem Sensor gelieferten Wertes oder einer Information über den Betriebszustand von Fahrzeugkomponenten mittels einer Steuereinrichtung vorzunehmen. In diesem Zusammenhang ist es beispielsweise vorteilhaft, das Ausgangssignal des Regensensors als Entscheidungskriterium für die Verwendung der geeigneten Tabelle zu verwenden. Sobald durch den Regensensor Regen detektiert wird, wird das entsprechende Sensorsignal der Bildverarbeitungseinrichtung des Sichtverbesserungssystems zugeleitet, die daraufhin zur Bildaufbereitung die Farbtabelle für Regen auswählt. Damit ist die Bildausgabe für den Fahrer auf dem Bildschirm der aktuellen Regensituation angepasst. Hierbei kann auch die Bildaufnahmeeinrichtung selbst als Sensor verwendet werden, wobei die von ihr aufgenommenen Bilder benützt werden, um die aktuellen Umgebungsbedingungen zu ermitteln und eine Auswahl der zu verwendenden Farbtabelle vorzunehmen. So können beispielsweise allein durch die Auswertung der Verteilung von Intensitätswerten über die Gesamtzahl der Pixel eines aufgenommenen Infrarotbildes (ein sogenanntes Histogramm) z. B. Aussagen über die Wettersituation getroffen werden. Häufungen bei geringen und hohen Intensitätswerten lassen auf ein kontrastreiches Bild einer Szene bei Nacht und klarem Wetter schließen, wogegen eine Häufung bei mittleren Intensitäten auf Nebel und damit ein kontrastarmes Bild schließen läßt. Nach der so vorgenommenen Klassifikation der Umfeldbedingungen wird in der Bildverarbeitungseinrichtung die zu verwendende Farbtabelle ausgewählt.
Ebenso ist es möglich, die Betriebszustände von Fahrzeugkomponenten wie beispielsweise des Scheibenwischers oder der Nebelschlussleuchte als Auswahlkriterium für die jeweilige Farbtabelle zu verwenden. Dabei können die über das Fahrzeugnetz ohnehin verfügbaren Informationen über die jeweiligen Betriebszustände vorteilhaft auf einfache Weise verwendet werden.

Eine weitere vorteilhafte Variante der Erfindung besteht darin, die Auswahl der zu verwendenden Farbtabellen durch eine Bedienungshandlung eines Benutzers vorzunehmen. Hierbei kann der Benutzer je nach Umgebungssituation selbst bestimmen, welche Darstellung für ihn die geeignete ist. Beispielsweise lässt sich diese Funktionalität über einen Drehschalter realisieren, der die einfache Auswahl der gewünschten Darstellung und damit der verwendeten Farbtabelle gestattet. Auch die Auswahl der Darstellung z. B. mittels eines Multifunktionslenkrades und/oder mit Hilfe eines menuegesteuerten Bedienkonzeptes gestatten eine komfortable Anpassung der Darstellung an die persönlichen Wünsche des Fahrers bzw. an die momentane Wetter- oder Beleuchtungssituation. Ebenso ist die Einstellung der gewünschten Darstellungseigenschaften über ein Spracheingabemodul möglich. Durch die benutzerseitige Auswahl der Darstellung des Bildes wird gewährleistet, dass das angezeigte Bild den Bedürfnissen des Benutzers nahekommt und damit die vorzeitige Ermüdung des Fahrers bei Verwendung der Vorrichtung zur Sichtverbesserung wirksam unterbunden wird.

Als Alternative zu einer Hinterlegung von Farbtabellen mit festen Farbwerten in der Speichereinheit hat es sich bewährt, die Farbtabellen mindestens teilweise mittels eines Farbtabellengenerators unter Verwendung der von der Bildaufnahmeeinrichtung aufgenommenen Eingangsfarbwerte dynamisch zu generieren.
Ein mögliches beispielhaftes Verfahren hierzu wird unter der vereinfachenden Annahme der Verwendung einer Schwarz-Weiß- bzw. Infrarotkamera sowie einer Schwarz-Weiß- bzw. Grauwert-Bildanzeigeeinrichtung nachfolgend erläutert.

Zur Berechnung der für die Darstellung zu verwendenden Farbtabellen können beispielsweise aufgenommene Bilder in bestimmten Intervallen, wie bspw. jedes 10. Bild, verwendet werden.
Zunächst wertet der Farbtabellengenerator in der Bildverarbeitungseinrichtung die Intensitätsverteilung des aufgenommenen Bildes aus, d. h. es werden für jede von der Bildaufnahmeeinrichtung messbare Intensitätsstufe die Anzahl der Pixel ermittelt, die die entsprechende Intensität aufweisen, also ein sogenanntes Histogramm gebildet. Um die Qualität des ausgegebenen Bildes zu verbessern, wird dabei die Maximalanzahl der pro Intensitätsstufe zu berücksichtigenden Pixel begrenzt, bspw. auf 100 oder 1% der Gesamtanzahl der aufgenommenen Pixel. Durch diese Maßnahme wird ein Verrauschen des ausgegebenen Bildes weitgehend unterdrückt.
Im nächsten Schritt nimmt der Farbtabellengenerator die Zuordnung der aufgenommenen Intensitäten zu auszugebenden Graustufen vor.
Dabei wird zunächst der Quotient Q aus der Anzahl der berücksichtigten Pixel und der Anzahl der darstellbaren Graustufen gebildet. Im nächsten Schritt werden die Anzahlen der berücksichtigten Pixel aus dem Histogramm beginnend mit der niedrigsten Intensitätsstufe nacheinander aufsummiert. Solange die so ermittelte Summe I kleiner ist als Q, werden die zugehörigen Intensitätswerte auf die unterste Graustufe abgebildet. Für Werte von I zwischen Q und 2Q werden die entsprechenden Intensitätswerte auf die zweite Graustufe abgebildet und so weiter. Somit wird der Kontrast für die Intensitätsbereiche, in denen das Maximum der aufgenommenen Pixel liegt, auf der Darstellungsseite automatisch erhöht.
Durch diese dynamische Art der Zuordnung kann auch unter unterschiedlichsten Bedingungen ein deutlich verbessertes Bild erreicht werden, das sich quasikontinuierlich an die aktuelle Wettersituation anpasst. Hierdurch entfallen die schlagartigen Änderungen der Darstellung, die bei einem Umschalten zwischen einzelnen, voneinander verschiedenen Farbtabellen auftreten und eine Irritation des Benutzers beim Umschalten wird vermieden.
Selbstverständlich lässt sich in ähnlicher Weise ein System realisieren, das die dynamische Generierung von Farbtabellen für die Aufnahme und Wiedergabe farbiger Bilder ermöglicht.

Die beschriebene Vorrichtung eignet sich besonders für den Einsatz in Fahrzeug-Nachtsichtsystemen auf Infrarotbasis. Bei diesen Systemen stehen typischerweise Bewegtbilddaten mit einem hohen Dynamikumfang, also einer Vielzahl an Abstufungen der aufgenommenen Intensitätswerte, zur Verfügung. Da das menschliche Auge nur ca. 80 Graustufen unterscheiden kann, besteht hier die besondere Herausforderung, die aufgenommenen Intensitätswerte für eine optimale Wahrnehmung durch den Fahrer aufzubereiten. Damit tritt die besondere Schwierigkeit auf, dass einerseits für die Anzeige wenige Graustufen zur Verfügung stehen, andererseits aber die Intensitätsbereiche, welche die für den Fahrer relevanten Informationen enthalten, sich abhängig von Wetter und Tageszeit verschieben. So sind beispielsweise nachts bei trockenem Wetter Bereiche mit geringer Intensität vorherrschend, während bei Nebel wegen des Streulichts vor allem die mittleren Intensitätsbereiche dominieren.
Die in der vorliegenden Patentanmeldung offenbarten Lösungsmöglichkeiten tragen diesen Umständen dadurch Rechnung, dass die Zuordnung der Eingangsfarbwerte zu Darstellungsfarbwerten nach der Lehre der Erfindung hochflexibel und ggf. sogar automatisch an die jeweiligen Witterungsbedingungen anpassbar ist. Die erfindungsgemäße Vorrichtung trägt somit wesentlich zur Steigerung der Verkehrssicherheit beim Einsatz von Infrarot-Nachtsichtsystemen bei.

Die Verwendung einer Grauwert- bzw. Schwarz-Weiß-Bildanzeigeeinrichtung bietet in einer weiteren Ausgestaltung der Erfindung eine Reihe von Vorteilen.
So reduziert sich der Speicherbedarf für die vorzuhaltenden Farbtabellen wesentlich, da durch die Bildaufnahmeeinrichtung für jeden Eingangsfarbwert nur ein Grauwert für die Darstellung gespeichert werden muss.
Die Zuordnung der Grauwerte zu den Eingangsfarbwerten bzw. die automatische Generierung der Farbtabellen vereinfacht sich erheblich, so dass eine höhere Verarbeitungsgeschwindigkeit der Bilddaten erreicht werden kann, was insbesondere bei der Darstellung von Bewegtbilddaten in Echtzeit, wie es beispielsweise bei einem Nachtsichtsystem erforderlich ist, vorteilhaft ist.
Ferner sinken durch Verwendung einer Grauwertdarstellung die Anforderungen an die verwendete Hardware zur Bildaufnahme, Bildverarbeitung und -darstellung.

Eine Alternative hierzu besteht in der Verwendung einer Falschfarbendarstellung zur Anzeige der Bilddaten. Dabei werden Farbwerte durch die Bildverarbeitungseinrichtung bestimmten, deutlich von den Eingangsfarbwerten abweichenden Darstellungsfarbwerten zugeordnet. Damit kann das Bild ggf. mit zusätzlichen Informationen auf eine benutzerfreundlichere Weise dargestellt werden. Darüber hinaus gestattet die Verwendung eines Falschfarbenbildes beispielsweise in Verbindung mit einem Head-Up-Display die Realisation einer Sicherheitsmaßnahme unter Verwendung psychologischer Mittel: Durch die Wahl von unrealistischen Farben zur Darstellung wird dem Fahrer ständig bewusst gemacht, dass er nicht etwa eine reale Verkehrsszene, sondern ein durch eine Vielzahl von Bildverarbeitungsmaßnahmen verändertes, elektronisch erzeugtes Bild betrachtet.
Damit wird der Charakter des verwendeten Systems als Assistenzsystem und nicht etwa als Ersatz für einen direkten Blick durch die Frontscheibe unterstrichen und die Sicherheit erhöht.

In besonders vorteilhafter Weise wird die erfindungsgemäße Vorrichtung bereits bei der Konzeption von Fahrzeugen berücksichtigt und bei der Herstellung in Neufahrzeuge integriert. Damit lassen sich fahrzeugseitig bereits Maßnahmen treffen, um den problemlosen Einbau der Vorrichtung zu realisieren und deren ungestörten Betrieb zu gewährleisten.

Darüber hinaus bezieht sich die in der vorliegenden Schrift beschriebene Erfindung auf ein Verfahren zur Verbesserung der Sicht in Fahrzeugen, wobei den von einer Bildaufnahmeeinrichtung aufgenommenen Eingangsfarbwerten abhängig von den Umgebungsbedingungen Darstellungsfarbwerte zugeordnet werden. Dieses Verfahren lässt sich beispielsweise durch entsprechende Modifikationen der verwendeten Softwarekomponenten an die Bedürfnisse des jeweiligen Benutzers sowie an die aktuelle Betriebssituation wie beispielsweise regionale Besonderheiten oder Jahreszeiten anpassen und zeigt somit eine hohe Flexibilität.

## Patentansprüche

1. Vorrichtung zur Verbesserung der Sicht für Kraftfahrzeuge mit einer Bildaufnahmeeinrichtung, einer Bildverarbeitungseinrichtung und einer Bildanzeigeeinrichtung, wobei die Bildverarbeitungseinrichtung Mittel aufweist, den von der Bildaufnahmeeinrichtung aufgenommenen Eingangsfarbwerten Darstellungsfarbwerte zur Darstellung durch die Bildanzeigeeinrichtung zuzuordnen,
**dadurch gekennzeichnet,**
**dass** für jeweils einen Eingangsfarbwert in Abhängigkeit von den Umgebungsbedingungen bestimmte Darstellungsfarbwerte vorgesehen sind.

2. Vorrichtung nach Anspruch 1,
**dadurch gekennzeichnet,**
**dass** eine Speichereinheit vorgesehen ist, in der mehrere Farbtabellen hinterlegt sind, in denen bestimmten Eingangsfarbwerten entsprechende Darstellungsfarbwerte zugeordnet sind, wobei die zu verwendende Farbtabelle in Abhängigkeit von Umgebungsparametern wählbar ist.

3. Vorrichtung nach Anspruch 2,
**dadurch gekennzeichnet,**
**dass** eine Logikeinheit vorgesehen ist, die geeignet ist, Darstellungsfarbwerte für nicht in der verwendeten Farbtabelle hinterlegte Eingangsfarbwerte zu bestimmen.

4. Vorrichtung nach Anspruch 2 oder 3,
**dadurch gekennzeichnet,**
**dass** die zu verwendende Farbtabelle unter Berücksichtigung des aktuellen Benutzers der Vorrichtung wählbar ist.

5. Vorrichtung nach einem der Ansprüche 2-4,
**dadurch gekennzeichnet,**
**dass** eine Steuereinrichtung vorgesehen ist, die geeignet ist, eine Farbtabelle unter Berücksichtigung eines von einem Sensor ausgegebenen Wertes oder einer Information über einen Betriebszustand einer Fahrzeugkomponente auszuwählen.

6. Vorrichtung nach einem der Ansprüche 2-4,
**dadurch gekennzeichnet,**
**dass** die Steuereinheit geeignet ist, eine Farbtabelle unter Berücksichtigung von Eigenschaften der von der Bildaufnahmeeinrichtung aufgenommenen Bilddaten auszuwählen.

7. Vorrichtung nach einem der Ansprüche 2-4,
**dadurch gekennzeichnet,**
**dass** eine Bedieneinheit vorgesehen ist, die geeignet ist, die Verwendung einer bestimmten Farbtabelle aufgrund einer Bedienungshandlung eines Benutzers herbeizuführen.

8. Vorrichtung nach einem der vorhergehenden Ansprüche,
**dadurch gekennzeichnet,**
**dass** die Bildverarbeitungseinrichtung einen Farbtabellengenerator aufweist, der geeignet ist, Farbtabellen mindestens teilweise unter Verwendung der von der Bildaufnahmeeinrichtung aufgenommenen Eingangsfarbwerte zu generieren.

9. Vorrichtung nach einem der vorhergehenden Ansprüche,
**dadurch gekennzeichnet,**
**dass** es sich bei der Bildaufnahmeeinrichtung um eine Infrarotkamera eines Nachtsichtsystems handelt.

10. Vorrichtung nach einem der vorhergehenden Ansprüche,
**dadurch gekennzeichnet,**
**dass** es sich bei den Darstellungsfarbwerten um Grauwerte handelt.

11. Vorrichtung nach einem der vorhergehenden Ansprüche,
**dadurch gekennzeichnet,**
**dass** es sich bei den Darstellungsfarbwerten um Farbwerte einer Falschfarbendarstellung handelt.

12. Fahrzeug mit einer Vorrichtung zur Sichtverbesserung nach den Ansprüchen 1-10.

13. Verfahren zur Verbesserung der Sicht in Fahrzeugen, wobei mittels einer Bildaufnahmeeinrichtung Eingangsfarbwerte erfasst werden und diesen in einer Bildverarbeitungseinrichtung Darstellungsfarbwerte zugeordnet werden,
**dadurch gekennzeichnet,**
**dass** die Zuordnung der Darstellungsfarbwerte zu den Eingangsfarbwerten abhängig von Umgebungsparametern erfolgt.
